# EUROPÄISCHE PATENTANMELDUNG

(11) **EP 1 880 850 A2**
(43) Veröffentlichungstag der Anmeldung: **23.01.2008**
(21) Anmeldenummer: 07013873.0
(22) Anmeldetag: 14.07.2007
(51) Int. Cl.: B41F 33/00

(54) **Verfahren und Vorrichtung zur Erzeugung einer farblichen Referenz für ein Druckbild**

(30) Priorität: 17.07.2006 DE 102006033006
(71) Anmelder: MAN Roland Druckmaschinen AG, 63012 Offenbach (DE)
(72) Erfinder: Fejfar, Florian, 81476 München (DE)
(74) Vertreter: Ulrich, Thomas

(57) **Zusammenfassung**

Die Erfindung betrifft ein Verfahren zur Erzeugung einer farblichen Referenz für ein zu druckendes Druckbild zur Visualisierung derselben auf einem farbverbindlichen Monitor, wobei aus hochauflösenden Rasterdaten des zu druckenden Druckbilds, die mit Hilfe eines Raster Image Prozessors aus Seitenbeschreibungsdaten des zu druckenden Druckbilds gewonnen werden, in der Auflösung reduzierte Bilddaten generiert werden, die mit Hilfe einer Colour Management Einrichtung in als farbliche Referenz des zu druckendes Druckbilds dienende und auf einem farbverbindlichen Monitor visualisierbare Anzeigedaten gewandelt werden. Erfindungsgemäß umfasst das Verfahren die folgenden Schritte: a) es wird eine Ist-Übertragungskennlinie ermittelt, die im Raster Image Prozessor verwendet wird, um aus den Seitenbeschreibungsdaten des zu druckenden Druckbilds entsprechende Rasterdaten zu generieren; b) die ermittelte Ist-Übertragungskennlinie wird mit einer vorgegebenen Soll-Übertragungskennlinie verglichen, wobei auf Basis dieses Vergleichs eine Korrekturkurve berechnet wird, die erforderlich ist, um ausgehend von der Ist-Übertragungskennlinie zu der Soll-Übertragungskennlinie zu gelangen; c) unter Verwendung der berechneten Korrekturkurve werden die Anzeigedaten ermittelt.

## Beschreibung

Die Erfindung betrifft ein Verfahren und eine Vorrichtung zur Erzeugung einer farblichen Referenz für ein zu druckendes Druckbild zur Visualisierung derselben auf einem farbverbindlichen Monitor.

Als farbliche Referenz bei der Ausführung eines Druckauftrags auf einer Druckmaschine, wie z. B. auf einer Rollenrotationsdruckmaschine oder auf einer Bogendruckmaschine, dient nach der Praxis üblicherweise ein auf einem Farbtintenstrahldrucker angefertigtes Referenzmuster, wobei ein Drucker die auf der Druckmaschine gedruckten Druckexemplare mit diesem Referenzmuster vergleicht. Solche auf einem Farbtintenstrahldrucker geduckten Referenzmuster bezeichnet man auch als Hardproof. Weiterhin ist es aus der Praxis bereits bekannt, zusätzlich zu dem oder als Ersatz für das auf dem Farbtintenstrahldrucker angefertigte Hardproof eine farbliche Referenz auf einem farbverbindlichen Monitor zu visualisieren. Die Visualisierung einer farblichen Referenz auf einem farbverbindlichen Monitor wird auch als Softproof bezeichnet. Die hier vorliegende Erfindung betrifft ein Verfahren zur Erzeugung einer farblichen Referenz für ein zu druckendes Druckbild zur Visualisierung derselben als Softproof auf einem farbverbindlichen Monitor.

Bei der Erzeugung einer farblichen Referenz für ein zu druckendes Druckbild zur Visualisierung derselben als Softproof wird nach der Praxis so vorgegangen, dass aus hochauflösenden Rasterdaten, die für eine Druckformbelichtung aus Seitenbeschreibungsdaten mit Hilfe eines Raster Image Prozessors gewonnen werden, in der Auflösung reduzierte Bilddaten generiert werden, wobei die in der Auflösung reduzierten Bilddaten mit Hilfe einer Colour Management Einrichtung in Anzeigedaten gewandelt werden, die als farbliche Referenz des zu druckenden Druckbilds dienen und als Softproof auf einem farbverbindlichen Monitor angezeigt werden können. Nach der Praxis werden demnach hochauflösende Rasterdaten zunächst in der Auflösung reduziert und in Bilddaten gewandelt, wobei aus den Bilddaten die als farbliche Referenz dienenden Anzeigedaten gewonnen werden.

Die Übernahme bzw. Verwendung von im Raster Image Prozessor (RIP) generierten Rasterdaten für die Erzeugung der farblichen Referenz für ein zu druckendes Druckbild ist insofern problematisch, da die Erzeugung der Rasterdaten aus den Seitenbeschreibungsdaten im Raster Image Prozessor unter Verwendung sogenannter RIP-Korrekturfunktionen erfolgt, um ein nicht-lineares Übertragungsverhalten von Tonwerten bzw. Flächendeckungswerten bei der Belichtung von Druckformen zu kompensieren. Dabei sind die RIP-Korrekturfunktionen nicht konstant sondern vielmehr Veränderungen bzw. Anpassungen unterworfen, um z. B. einer sich ändernden Beschaffenheit einer Druckform oder einem sich ändernden Belichtungsprozess der Druckform Rechnung zu tragen. Auf Grundlage solcher sich ändernder RIP-Korrekturfunktionen können demnach z. B. als Tonwerte vorliegende Seitenbeschreibungsdaten in den daraus zu erzeugenden Rasterdaten z. B. als Flächendeckungswerte unterschiedlich wiedergegeben bzw. abgebildet werden. Da jedoch die Rasterdaten Grundlage für die Erzeugung der als farbliche Referenz dienenden Anzeigedaten für eine Softproof-Visualisierung sind, können die sich ändernden RIP-Korrekturfunktionen die Anzeigedaten derart beeinflussen, dass dieselben in Ihrer Qualität im Hinblick auf das zu visualisierende Softproof verschlechtert werden. Bislang sind keine Verfahren zur Erzeugung einer farblichen Referenz für ein zu druckendes Druckbild zur Softproof-Visualisierung derselben bekannt, die dem obigen Problem Rechnung tragen.

Hiervon ausgehend liegt der vorliegenden Erfindung das Problem zugrunde ein Verfahren und eine Vorrichtung zur Erzeugung einer farblichen Referenz für ein zu druckendes Druckbild zu schaffen, welches die farbliche Wiedergabe des zu druckenden Druckbilds verbessert.

Dieses Problem wird durch ein Verfahren gemäß Anspruch 1 gelöst. Erfindungsgemäß umfasst das Verfahren zumindest die folgenden Schritte: a) es wird eine Ist-Übertragungskennlinie ermittelt, die im Raster Image Prozessor verwendet wird, um aus den Seitenbesclireibungsdaten des zu druckenden Druckbilds entsprechende Rasterdaten zu generieren; b) die Ist-Übertragungskennlinie wird mit einer vorgegebenen Soll-Übertragungskennlinie verglichen, wobei auf Basis dieses Vergleichs eine Korrekturkurve berechnet wird, die erforderlich ist, um ausgehend von der Ist-Übertragungskennlinie zu der Soll-Übertragungskennlinie zu gelangen; c) unter Verwendung der berechneten Korrekturkurve werden die Anzeigedaten ermittelt.

Mit dem erfindungsgemäßen Verfahren wird erstmals vorgeschlagen, eine Ist-Übertragungskennlinie, die im Raster Image Prozessor zur Generierung der Rasterdaten aus den Seitenbeschreibungsdaten verwendet wird, zu ermitteln, und auf Grundlage eines Vergleichs zwischen der ermittelten Ist-Übertagungskennlinie und einer vorgegebenen Soll-Übertragungskennlinie eine Korrekturkurve zu generieren, unter Verwendung derer die als farbliche Referenz dienenden Anzeigedaten ermittelt werden. Die ermittelte Ist-Übertragungslinie ist von der RIP-Korrekturfunktion des Raster Image Prozessors abhängig, so dass mit Hilfe der berechneten Korrekturkurve die Qualität der Softproof-Visualisierung beeinträchtigende Datenänderungen in den Anzeigedaten kompensiert bzw. herausgerechnet sind. Hierdurch kann die Qualität einer Softproof-Visualisierung gesteigert werden.

Nach einer vorteilhaften Weiterbildung wird die Ist-Übertragungskennlinie dadurch ermittelt, dass ein definierter Bereich der Rastendaten oder der Bilddaten derart ausgewertet wird, dass für diesen definierten Bereich der Rastendaten oder der Bilddaten Flächendeckungswerte oder Tonwerte ermittelt werden, wobei diese für den definierten Bereich ermittelten Flächendeckungswerte oder Tonwerte mit Flächendeckungswerten oder Tonwerten verglichen werden, die sich bei bekannten Seitenbeschreibungsdaten für den definierten Bildbereich und bei einer linearen Übertragungskennlinie bei der Umwandlung der Seitenbeschreibungsdaten in lineare Rastendaten oder lineare Bilddaten ergeben, und wobei auf Basis dieses Vergleichs die Ist-Übertragungskennlinie errechnet wird.

Bei dem definierten Bereich handelt es sich vorzugsweise um ein als Bestandteil des zu druckenden Druckbilds ausgebildetes Kontrollelement, welches mindestes ein Feld mit einem vorgegebenen Flächendeckungswert oder Tonwert sowie mindestens ein Feld zur Erkennung des Kontrollelements in den Rasterdaten oder Bilddaten aufweist.

Die erfindungsgemäße Vorrichtung ist in Anspruch 10 definiert. Dieselbe umfasst: a) eine Einrichtung, die eine Ist-Übertragungskennlinie automatisch ermittelt, die im Raster Image Prozessor verwendet wird, um aus den Seitenbeschreibungsdaten des zu druckenden Druckbilds die Rasterdaten automatisch zu generieren; b) eine Einrichtung, welche die Ist-Übertragungskennlinie mit einer vorgegebenen Soll-Übertragungskennlinie automatisch vergleicht, und auf Basis dieses Vergleichs automatisch eine Korrekturkurve berechnet wird, die erforderlich ist, um ausgehend von der Ist-Übertragungskennlinie zu der Soll-Übertragungskennlinie zu gelangen; c) eine Einrichtung, die unter Verwendung der berechneten Korrekturkurve die Anzeigedaten automatisch ermittelt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der.Zeichnung näher erläutert. Dabei zeigt:

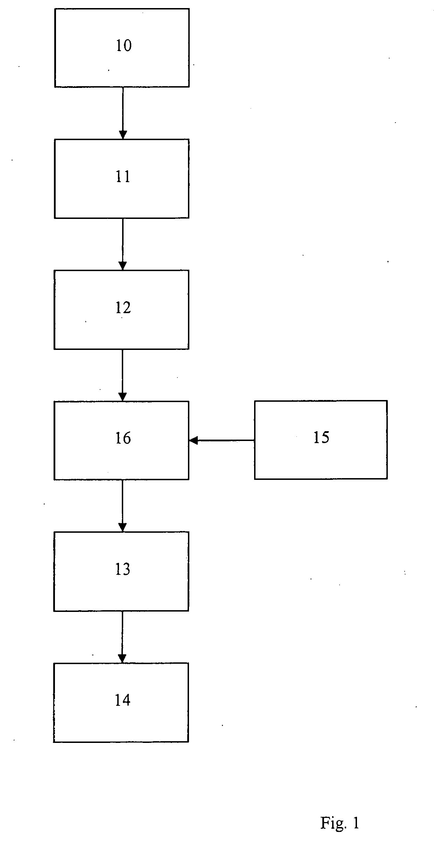

- Fig. 1:: ein schematisiertes Blockschaltbild zur Verdeutlichung des erfindungsgemäßen Verfahrens zur Erzeugung einer farblichen Referenz für ein zu druckendes Druckbild.

Nachfolgend wird unter Bezugnahme auf Fig. 1 das erfindungsgemäße Verfahren zur Erzeugung einer farblichen Referenz für ein zu druckendes Druckbild zur Softproof-Visualisierung desselben auf einem farbverbindlichen Monitor im Detail beschrieben:

In groben Zügen wird zur Erzeugung der farblichen Referenz für ein zu druckendes Druckbild so vorgegangen, dass aus durch einen Block 10 visualisierten Seitenbeschreibungsdaten des zu druckenden Druckbilds mit Hilfe eines Raster Image Prozessors - kurz RIP genannt - hochauflösende Rasterdaten gewonnen werden, die durch einen Block 11 visualisiert sind. Solche hochauflösenden Rasterdaten dienen zur Belichtung von Druckformen, insbesondere von Druckplatten, und werden aus den Seitenbeschreibungsdaten des zu druckenden Druckbilds unter Verwendung sogenannter RIP-Korrekturfunktionen, die im Raster Image Prozessor implementiert sind, gewonnen.

Die Seitenbeschreibungsdaten liegen insbesondere als Postscript-Daten oder PDF-Daten vor und definieren das zu druckende Druckbild vorzugsweise über Tonwerte. In den Rasterdaten ist das zu druckende Druckbild vorzugsweise über Flächendeckungswerte definiert.

Aus den durch den Block 11 visualisierten Rasterdaten werden in der Auflösung reduzierte Bilddaten generiert, die vorzugsweise als Bytemap vorliegen. Die in der Auflösung reduzierten Bilddaten sind durch den Block 12 visualisiert.

Die Bilddaten werden mit Hilfe einer Colour Management Einrichtung in Anzeigedaten gewandelt, die als farbliche Referenz des zu druckenden Druckbilds dienen und in Fig. 1 durch den Block 13 dargestellt sind. Die Anzeigedaten können auf einem farbverbindlichen Monitor in Form eines Softproof visualisiert werden, wobei das zu visualisierende Softproof durch den Block 14 dargestellt ist.

Die durch die Blöcke 10 bis 14 verdeutlichten Verfahrensschritte des erfindungsgemäßen Verfahrens zur Erzeugung einer farblichen Referenz für ein zu druckendes Druckbild zur Softproof-Visualisierung derselben werden bereits bei den aus der Praxis bekannten Verfahren verwendet, so dass dieselben dem hier angesprochenen Fachmann bekannt sind und keiner detaillierten Beschreibung bedürfen. Hierzu zählen demnach die Generierung hochauflösender Rasterdaten aus Seitenbeschreibungsdaten mit Hilfe eines Raster Image Prozessors, die Generierung von in der Auflösung reduzierter Bilddaten aus den hochauflösenden Rasterdaten, die Umwandlung der Bilddaten in Anzeigedaten mit Hilfe einer Colour Management Einrichtung sowie die Visualisierung der Anzeigedaten auf einem farbverbindlichen Monitor. Daraus folgt, dass nach dem Stand der Technik ein zu visualisierendes Softproof von den Rasterdaten und damit von einer RIP-Korrekturfunktion, die im Raster Image Prozessor zur Generierung der Rasterdaten aus den Seitenbeschreibungsdaten verwendet wird, abhängig ist.

Um zur Qualitätssteigerung der Softproof-Visualisierung dieselbe unanhängig von der im Raster-Image-Prozessor implementierten RIP-Korrekturfunktion zu gestalten, wird im Sinne der hier vorliegenden Erfindung vorgeschlagen, eine Ist-Übertragungs-Kennlinie automatisiert zu ermitteln, die im Raster lmage Prozessor verwendet wird, um aus den Seitenbeschreibungsdaten des zu druckenden Druckbilds die entsprechenden Rasterdaten automatisiert zu generieren.

Diese Ist-Übertragungskennlinie wird automatisiert mit einer vorgegebenen Soll-Übertragungskennlinie verglichen, wobei auf Basis dieses Vergleichs eine Korrekturkurve automatisiert berechnet wird, die erforderlich ist, um ausgehend von der Ist-Übertragungskennlinie zu der vorgegebenen Soll-Übertragungskennlinie zu gelangen. Die Anzeigedaten, welche die farbliche Referenz des zu druckenden Druckbilds dienen, werden dann erfindungsgemäß unter Verwendung der berechneten Korrekturkurve automatisiert ermittelt. Die ermittelte Korrekturkurve ist in Fig. 1 durch den Block 15 visualisiert.

In dem in Fig. 1 visualisierten Ausführungsbeispiel wird die durch den Block 15 visualisierte, ermittelte Korrekturkurve auf die durch den Block 12 visualisierten, in der Auflösung reduzierten und von der RIP-Korrekturfunktion des Raster Image Prozessors abhängigen und damit unkorrigierten Bilddaten angewendet, wobei hierbei die unkorrigierten Bilddaten in auf Basis der Korrekturkurve korrigierte Bilddaten gewandelt werden. Die auf Basis der Korrekturkurve generierten, korrigierten Bilddaten sind in Fig. 1 durch den Block 16 visualisiert. Aus diesen korrigierten Bilddaten, aus welchen über die Korrekturkurve der Einfluss von RIP-Korrekturfunktionen herausgerechnet ist, werden dann die Anzeigedaten generiert, die als farbliche Referenz des zu druckenden Druckbilds und damit zur Softproof-Visualisierung dienen.

Es sei darauf hingewiesen, dass die Anwendung der durch den Block 15 visualisierten Korrekturkurve auf die durch den Block 12 visualisierten, unkorrigierten Bilddaten vorzugsweise in Form einer Gradiationskorrektur auf die unkorrigierten Bilddaten, die vorzugsweise als Bytemap vorliegen, erfolgt.

Im Unterschied zum gezeigten Ausführungsbeispiel ist die durch den Block 15 visualisierte Korrekturkurve auch auf die durch den Block 11 visualisierten, hochauflösenden Rasterdaten anwendbar, wobei dann aus entsprechend korrigierten Rasterdaten in der Auflösung reduzierte Bilddaten generiert werden, die unabhängig von RIP-Korrekturfunktionen des Raster Image Prozessors sind. Die so generierten Bilddaten können dann in Anzeigedaten gewandelt werden, die wiederum als farbliche Referenz des zu druckenden Druckbilds dienen.

Auch ist es möglich, die durch den Block 15 visualisierte Korrekturkurve in der Colour Management Einrichtung zu verwenden, um so aus den unkorrigierten, von RIP-Korrekturfunktionen abhängigen Bilddaten unter Verwendung der Korrekturkurve Anzeigedaten zu ermitteln, aus welchen die RIP-Korrekturfunktionen herausgerechnet sind, und die dann als farbliche Referenz des zu druckenden Druckbilds dienen.

Bei der Ermittlung der Ist-Übertragungskennlinie, die im Raster Image Prozessor zur Generierung der Rasterdaten aus den Seitenbeschreibungsdaten des zu druckenden Druckbilds verwendet wird; wird vorzugsweise so vorgegangen, dass ein definierter Bereich der durch den Block 11 visualisierten Rasterdaten oder der durch den Block 12 visualisierten Bilddaten, die jeweils von RIP-Korrekturen abhängig sind, ausgewertet wird. Dieser definierte Bereich der Rasterdaten oder der Bilddaten ist vorzugsweise durch ein Kontrollelement gebildet, welches Bestandteil des zu druckenden Druckbilds ist.

Ein solches Kontrollelement verfügt über mindestens ein Feld mit einem vorgegebenen Flächendeckungswert oder Tonwert sowie über mindestens ein Feld zur Erkennung des Kontrollelements in den Rasterdaten oder Bilddaten. Vorzugsweise umfasst das Kontrollelement mehrere Felder mit vorgegebenen Flächendeckungswerten oder Tonwerten, die einen definierten Tonwertverlauf oder Flächendeckungswertverlauf für das Kontrollelement bilden.

Ist der dem Kontrollelement entsprechende Bereich der Rasterdaten oder Bilddaten in denselben aufgefunden, so werden für diesen definierten Bereich Flächendeckungswerte oder Tonwerte ermittelt, wobei diese für den definierten Bereich ermittelten Flächendeckungswerte oder Tonwerte mit Flächendeckungswerten oder Tonwerten verglichen werden, die sich bei bekannten Seitenbeschreibungsdaten für den definierten Bereich bzw. das Kontrollelement und unter Annnahme einer linearen Übertragungskennlinie bei Umwandlung der Seitenbeschreibungsdaten in lineare Rasterdaten oder Bilddaten ergeben. Auf Basis dieses Vergleichs ist die Ist-Übertragungslinie errechenbar, und zwar derart, dass für jedes Feld des Kontrollelements, welches durch einen vorgegebenen Flächendeckungswert oder Tonwert gekennzeichnet ist, eine Stützstelle der Ist-Übertragungskennlinie bestimmt wird, und das zwischen benachbarten Stützstellen zur Vervollständigung der Ist-Übertragungskennlinie eine Interpolation durchgeführt wird. Die so ermittelte Ist-Übertragungskennlinie bildet demnach eine im Raster Image Prozessor implementierte RIP-Korrekturfunktion ab bzw. rekonstruiert dieselbe.

Zur Ermittlung der durch den Block 15 visualisierten Korrekturkurve wird die Ist-Übertragungskennlinie mit einer vorgegebenen Soll-Übertragungskennlinie verglichen, wobei es sich bei der vorgegebenen Soll-Übertragungskennlinie um eine lineare oder auch eine nicht-lineare Soll-Übertragungskennlinie handeln kann. Auf Grundlage dieses Vergleichs zwischen der ermittelten Ist-Übertragungskennlinie und der vorgegebenen Soll-Übertragungskennlinie wird die Korrekturkurve berechnet, die erforderlich ist, um ausgehend von der Ist-Übertragungskennlinie zu der Soll-Übertragungskennlinie zu gelangen.

Im Unterschied zum oben beschriebenen, bevorzugten Ausführungsbeispiel ist es auch möglich, die Ist-Übertragungskennlinie des Raster Image Prozessors, welche vorzugsweise als Tonwerte vorliegende Seitenbeschreibungsdaten in vorzugsweise als Flächendeckungswerte vorliegende Rasterdaten umsetzt, aus Metadaten des Raster Image Prozessors zu ermitteln. Hierzu ist es jedoch erforderlich, dass entsprechende Metadaten vom Raster Image Prozessor bereitgehalten und über eine Schnittstelle ausgelesen werden können.

Es liegt demnach im Sinne der hier vorliegenden Erfindung, durch einen Raster Image Prozessor über RIP-Korrekturen vorgenommene Nichtlinearisierungen der Rasterdaten über eine Korrekturkurve zu kompensieren. Hierdurch ist gewährleistet, dass eine Softproof-Visualisierung unabhängig von RIP-Korrekturen des Raster Image Prozessors ist, wodurch letztendlich Softproof-Visualisierungen mit einer hohen Qualität möglich sind.

### Bezugszeichenliste

- 10: Block
- 11: Block
- 12: Block
- 13: Block
- 14: Block
- 15: Block
- 16: Block

## Patentansprüche

1. Verfahren zur Erzeugung einer farblichen Referenz für ein zu druckendes Druckbild zur Visualisierung derselben auf einem farbverbindlichen Monitor, wobei aus hochauflösenden Rasterdaten des zu druckenden Druckbilds, die mit Hilfe eines Raster Image Prozessors aus Seitenbeschreibungsdaten des zu druckenden Druckbilds gewonnen werden, in der Auflösung reduzierte Bilddaten generiert werden, die mit Hilfe einer Colour Management Einrichtung in als farbliche Referenz des zu druckendes Druckbilds dienende und auf einem farbverbindlichen Monitor visualisierbare Anzeigedaten gewandelt werden, **dadurch gekennzeichnet, dass:**
a) eine Ist-Übertragungskennlinie ermittelt wird, die im Raster Image Prozessor verwendet wird, um aus den Seitenbeschreibungsdaten des zu druckenden Druckbilds die entsprechenden Rasterdaten zu generieren;
b) die ermittelte Ist-Übertragungskennlinie mit einer vorgegebenen Soll-Übertragungskennlinie verglichen wird, und dass auf Basis dieses Vergleichs eine Korrekturkurve berechnet wird, die erforderlich ist, um ausgehend von der Ist-Übertragungskennlinie zu der Soll-Übertragungskennlinie zu gelangen;
c) unter Verwendung der berechneten Korrekturkurve die Anzeigedaten ermittelt werden.

2. Verfahren nach Anspruch 1, **dadurch gekennzeichnet, dass** in Schritt a) die Ist-Übertragungskennlinie aus Metadaten des Raster Image Prozessors ermittelt wird.

3. Verfahren nach Anspruch 1, **dadurch gekennzeichnet, dass** in Schritt a) die Ist-Übertragungskennlinie **dadurch** ermittelt wird, dass ein definierter Bereich der Rastendaten oder der Bilddaten ausgewertet wird.

4. Verfahren nach Anspruch 3, **dadurch gekennzeichnet, dass** hierzu für den definierten Bereich der Rastendaten oder der Bilddaten Flächendeckungswerte oder Tonwerte ermittelt werden, wobei diese für den definierten Bereich ermittelten Flächendeckungswerte oder Tonwerte mit Flächendeckungswerten oder Tonwerten verglichen werden, die sich bei bekannten Seitenbeschreibungsdaten für den Bildbereich und bei einer linearen Übertragungskennlinie bei der Umwandlung der Seitenbeschreibungsdaten in lineare Rastendaten oder lineare Bilddaten ergeben, und wobei auf Basis dieses Vergleichs die Ist-Übertragungskennlinie errechnet wird.

5. Verfahren nach Anspruch 3 oder 4, **dadurch gekennzeichnet, dass** der definierte Bereich der Rastendaten oder Bilddaten durch ein Kontrollelement, welches Bestandteil des zu druckenden Druckbilds ist, gebildet wird, wobei das Kontrollelement mindestes ein Feld mit einem vorgegebenem Flächendeckungswert oder Tonwert sowie mindestens ein Feld zur Erkennung des Kontrollelements in den Rastendaten oder Bilddaten aufweist.

6. Verfahren nach einem oder mehreren der Ansprüche 1 bis 5, **dadurch gekennzeichnet, dass** in Schritt b) als Soll-Übertragungskennlinie eine lineare Soll-Übertragungskennlinie oder eine nicht-lineare Soll-Übertragungskennlinie vorgegeben wird.

7. Verfahren nach einem oder mehreren der Ansprüche 1 bis 6, **dadurch gekennzeichnet, dass** in Schritt c) die Korrekturkurve auf die in der Auflösung reduzierten, unkorrigierten Bilddaten angewendet wird, wobei entsprechend korrigierte Bilddaten in die als farbliche Referenz des zu druckendes Druckbilds dienenden Anzeigedaten gewandelt werden.

8. Verfahren nach einem oder mehreren der Ansprüche 1 bis 6, **dadurch gekennzeichnet, dass** in Schritt c) die Korrekturkurve auf die hochauflösenden, unkorrigierten Rasterdaten angewendet wird, wobei aus entsprechend korrigierten Rasterdaten in der Auflösung reduzierte Bilddaten generiert werden, die in als farbliche Referenz des zu druckendes Druckbilds dienende Anzeigedaten gewandelt werden.

9. Verfahren nach einem oder mehreren der Ansprüche 1 bis 6, **dadurch gekennzeichnet, dass** in Schritt c) die Korrekturkurve in der Colour Management Einrichtung angewendet wird, um die unkorrigierten Bilddaten unter Verwendung der Korrekturkurve in als farbliche Referenz des zu druckendes Druckbilds dienende Anzeigedaten zu wandeln.

10. Vorrichtung zur Erzeugung einer farblichen Referenz für ein zu druckendes Druckbild zur Visualisierung derselben auf einem farbverbindlichen Monitor, wobei dieselbe aus hochauflösenden Rasterdaten des zu druckenden Druckbilds, die mit Hilfe eines Raster Image Prozessors aus Seitenbeschreibungsdaten des zu druckenden Druckbilds gewonnen werden, in der Auflösung reduzierte Bilddaten generiert, die mit Hilfe einer Colour Management Einrichtung in als farbliche Referenz des zu druckendes Druckbilds dienende und auf einem farbverbindlichen Monitor visualisierbare Anzeigedaten gewandelt werden, **gekennzeichnet durch:**
a) eine Einrichtung, die eine Ist-Übertragungskennlinie automatisch ermittelt, die im Raster Image Prozessor verwendet wird, um aus den Seitenbeschreibungsdaten des zu druckenden Druckbilds die Rasterdaten zu generieren;
b) eine Einrichtung, welche die Ist-Übertragungskennlinie mit einer vorgegebenen Soll-Übertragungskennlinie automatisch vergleicht, und auf Basis dieses Vergleichs automatisch eine Korrekturkurve berechnet wird, die erforderlich ist, um ausgehend von der Ist-Übertragungskennlinie zu der Soll-Übertragungskennlinie zu gelangen;
c) eine Einrichtung, die unter Verwendung der berechneten Korrekturkurve die Anzeigedaten automatisch ermittelt.

11. Vorrichtung nach Anspruch 10, **dadurch gekennzeichnet, dass** die Einrichtung nach Merkmal a) die Ist-Übertragungskennlinie aus Metadaten des Raster Image Prozessors automatisch ermittelt.

12. Vorrichtung nach Anspruch 10, **dadurch gekennzeichnet, dass** die Einrichtung nach Merkmal a) die Ist-Übertragungskennlinie **dadurch** automatisch ermittelt, dass ein definierter Bereich der Rastendaten oder der Bilddaten ausgewertet wird.

13. Vorrichtung nach Anspruch 12, **dadurch gekennzeichnet, dass** hierzu die Einrichtung für den definierten Bereich der Rastendaten oder der Bilddaten Flächendeckungswerte oder Tonwerte ermittelt, wobei die Einrichtung diese für den definierten Bereich ermittelten Flächendeckungswerte oder Tonwerte mit Flächendeckungswerten oder Tonwerten vergleicht, die sich bei bekannten Seitenbeschreibungsdaten für den Bildbereich und bei einer linearen Übertragungskennlinie bei der Umwandlung der Seitenbeschreibungsdaten in lineare Rastendaten oder lineare Bilddaten ergeben, und wobei die Einrichtung auf Basis dieses Vergleichs die Ist-Übertragungskennlinie errechnet.

14. Vorrichtung nach einem oder mehreren der Ansprüche 10 bis 13, **dadurch gekennzeichnet, dass** der Einrichtung nach Merkmal b) als Soll-Übertragungskennlinie eine lineare Soll-Übertragungskennlinie oder eine nicht-lineare Soll-Übertragungskennlinie vorgegeben wird.

15. Vorrichtung nach einem oder mehreren der Ansprüche 10 bis 14, **dadurch gekennzeichnet, dass** die Einrichtung nach Merkmal c) die Korrekturkurve auf die in der Auflösung reduzierten, unkorrigierten Bilddaten anwendet, wobei entsprechend korrigierte Bilddaten in die als farbliche Referenz des zu druckendes Druckbilds dienenden Anzeigedaten gewandelt werden.

16. Vorrichtung nach einem oder mehreren der Ansprüche 10 bis 14, **dadurch gekennzeichnet, dass** die Einrichtung nach Merkmal c) die Korrekturkurve auf die hochauflösenden, unkorrigierten Rasterdaten anwendet, wobei aus entsprechend korrigierten Rasterdaten in der Auflösung reduzierte Bilddaten generiert werden, die in als farbliche Referenz des zu druckendes Druckbilds dienende Anzeigedaten gewandelt werden.

17. Vorrichtung nach einem oder mehreren der Ansprüche 10 bis 14, **dadurch gekennzeichnet, dass** die Colour Management Einrichtung die Korrekturkurve anwendet, um die unkorrigierten Bilddaten unter Verwendung der Korrekturkurve in als farbliche Referenz des zu druckendes Druckbilds dienende Anzeigedaten zu wandeln.
